# EUROPÄISCHE PATENTSCHRIFT

(11) **EP 2 470 915 B1**
(45) Veröffentlichungstag und Bekanntmachung des Hinweises auf die Patenterteilung: **02.10.2019**
(21) Anmeldenummer: 10721003.1
(22) Anmeldetag: 18.05.2010
(51) Int. Cl.: G01N 35/10, B01F 5/06, B01F 13/00, B01L 3/00, G01N 35/08, G01N 35/00

(54) **MODULARES FLIESSINJEKTIONS-ANALYSESYSTEM**
MODULAR FLOW INJECTION ANALYSIS SYSTEM
SYSTÈME D'ANALYSE MODULAIRE PAR INJECTION EN FLUX CONTINU

(30) Priorität: 04.06.2009 DE 202009007800 U
(43) Veröffentlichungstag der Anmeldung: 04.07.2012
(73) Patentinhaber: Bürkert Werke GmbH, 74653 Ingelfingen (DE)
(72) Erfinder: OBERNDORFER, Christian, 74523 Schwäbisch Hall (DE); WINKLER, Michael, 74679 Weissbach (DE); ZÜRN, Marco, 74214 Schöntal-Winzenhofen (DE)
(74) Vertreter: Prinz & Partner mbB
(86) Internationale Anmeldenummer: PCT/EP2010/003032
(87) Internationale Veröffentlichungsnummer: WO 2010/139398

(56) Entgegenhaltungen:
- WO-A1-2008/052758
- WO-A2-98/53300
- DE-U1- 29 703 788
- DE-U1-202008 009 938
- US-A1- 2002 124 896
- US-A1- 2004 086 872
- US-B1- 6 827 906
- US-B1- 6 852 291

## Beschreibung

Die Erfindung betrifft ein modulares Fließinjektions-Analysesystem mit einem Probenanschluss, einem Reagenzzufluss und einer Medien-Ableitung.

Die Fließinjektionsanalyse (FIA) ist in der analytischen Chemie bekannt als ein automatisiertes Verfahren zum Nachweis bestimmter Stoffe in einer Probe und zur Bestimmung ihrer jeweiligen Konzentration. Sie findet Einsatz im klinischen Bereich, aber auch im Umwelt- und pharmazeutischen Bereich. Beispielsweise erlaubt die Fließinjektionsanalyse auch die Kontrolle von Trinkwasser.

Herkömmliche Geräte für die Fließinjektionsanalyse bzw. für die ähnlich arbeitende segmentierte Fließanalyse (CFA - Continuous Flow Analysis), bei der einzelne Probenabschnitte durch Luftblasen getrennt werden, bestehen aus einem Verteiler zur Bereitstellung und Beförderung der benötigten Reagenzien, einer Injektionseinheit, einer Mischeinheit und einer Detektionseinheit. Es handelt sich bei diesen Einheiten um separate Geräte, die über Schläuche miteinander verbunden sind. Beim Austausch einzelner Einheiten zum Anpassen an eine andere Analyseaufgabe müssen diese Schlauchverbindungen getrennt und anschließend wieder neue Verbindungen hergestellt werden. Bedingt durch die zulässigen minimalen Krümmungsradien der verwendeten Schläuche benötigen die herkömmlichen Fließinjektions-Analysesysteme mit ihren einzelnen Einheiten einen größeren Raum.

WO 2008/052758 A1 offenbart ein modulares Laborgerät zur Analyse und Synthese von Flüssigkeiten. Dieses weist einen Flüssigkeitsbehälter, eine zentrale Auswerteelektronik, eine Vielzahl von Funktionsmodulen und eine Vielzahl von Fluidmodulen auf. Die Funktionsmodule sind in Reihe angeordnet und mechanisch und fluidisch miteinander verbunden. Mindestens ein Fluidmodul ist fluidisch mit dem Flüssigkeitsbehälter und einem der Funktionsmodule verbunden, und es sind elektrische Verbindungen vorgesehen, die die Funktionsmodule und die Fluidmodule mit der zentralen Auswerteelektronik verbinden.

US 6852291 B1 offenbart eine Hybridventilvorrichtung zur Verwendung mit einem Ansaugaktuator und einem Abgabeaktuator zum Übertragen von Fluid von einem Reservoir zu einer Teststelle auf einer Substratoberfläche. Das Hybridventil umfasst eine Ventilanordnung, die zwischen einer Ansaugbedingung und einer
Ausgabebedingung bewegbar ist, und eine Verteilervorrichtung, die mit der Ventilanordnung gekoppelt ist. Die Verteilervorrichtung umfasst eine Fluidansaugleitung mit einer ersten Ansaugöffnung in Fluidverbindung mit dem Ansaugaktor. An einem entgegengesetzten Ende der Aspirationsleitung befindet sich eine zweite Aspirationsöffnung in selektiver Fluidverbindung mit der Ventilanordnung, um selektiv einen flüssigen Probenblock aus dem Reservoir in einen getrennten Probenweg abzusaugen, wenn sich die Ventilanordnung in dem Aspirationszustand befindet. Die Verteilervorrichtung umfasst ferner eine Fluidabgabeleitung mit einer ersten Abgabeöffnung in Fluidverbindung mit dem Abgabeaktuator und einer zweiten Abgabeöffnung in selektiver Fluidverbindung mit der Ventilanordnung. Wenn sich die Ventilanordnung in dem Abgabebedingungszustand befindet, ist der Probenweg mit dem Abgabebetätiger fluidisch verbunden, um selektiv mindestens einen Tropfen des flüssigen Probenballens daraus abzugeben, während gleichzeitig keine Fluidverbindung mit dem Aspirationsaktuator besteht.

Für weitere relevante Druckschriften wird hingewiesen auf: US 2004/086872 A1, WO 98/53300 A2, US 6827906 B1, US 2002/124896 A1, DE 202008009938 U1 und DE 29703788 U1.

Es ist wünschenswert, die Vielzahl von Schlauchverbindungen unnötig zu machen und damit eine geringere Baugröße und geringere Komplexität zu erreichen. Die Anpassung an verschiedene Messaufgaben sollte leicht realisierbar sein, ohne das gesamte System austauschen und ohne neue Schlauchverbindungen herstellen zu müssen. Dabei sollte das Analysesystem ausbaufähig sein, damit komplexere, · mehrstufige Aufgaben gelöst werden können.

Die Erfindung stellt ein modulares Fließinjektions-Analysesystem mit einem Probenanschluss, einem Reagenzzufluss und einer Medien-Ableitung bereit, das aus einer Mehrzahl von aufeinandergestapelten Funktionsmodulen gebildet ist. Gemäß den Merkmalen des Anspruchs 1 umfassen diese Funktionsmodule wenigstens ein Dosiermodul mit einem Dosierkanal, der einen Eingang und einen Ausgang hat, ein Mischmodul mit einem Mischkanal, der einen Eingang und einen Ausgang hat, ein Analysemodul mit einer Medienkammer, die mit dem Ausgang des Mischkanals verbunden ist, und ein Medien-Steuermodul. Die Module sind durch fluchtende Medienkanäle verbunden. Diese Medienkanäle ersetzen die herkömmlichen Schlauchverbindungen. Sie werden automatisch verbunden, wenn die Module zusammengesetzt werden.

Ein Medien-Steuermodul verbindet ventilgesteuert selektiv den Probenanschluss oder den Reagenzzufluss mit dem Eingang des Dosierkanals des Dosiermoduls. Damit kann in die Probe, bei der es sich beispielsweise um Trinkwasser handeln könnte, je nach Messaufgabe gezielt das gewünschte Reagenz injiziert werden. Dabei bestimmen die Länge und der Querschnitt des Dosierkanals die Menge des zugeführten Reagenz. Das Medien-Steuermodul verbindet zudem ventilgesteuert selektiv den Ausgang des Dosierkanals mit dem Eingang des Mischkanals oder mit einer Ableitung. Um eine bestimmte Reagenzmenge abzumessen, wird der Dosierkanal vollständig mit dem Reagenz gefüllt. Hierzu steuert das Medien-Steuermodul den Reagenzzufluss zum Eingang des Dosierkanals und verbindet den Ausgang des Dosierkanals mit einer Reagenzableitung für eine Zeitdauer, die sicherstellt, dass der Dosierkanal vollständig mit Reagenz gefüllt ist. Der Dosierkanal erlaubt eine sehr genaue Dosierung selbst bei einer leicht variierenden Durchflussrate und einer gröberen Zeitsteuerung des Ventils.

Vorzugsweise umfasst das Fließinjektions-Analysesystem ferner ein Medien-Anschlussmodul, das einen Probenanschluss und einen Abfallanschluss aufweist. Durch den Abfallanschluss fließt die Probe, die mit dem Reagenz vermischt ist, ab, nachdem die Analyse im Analysemodul erfolgt ist.

In einer bevorzugten Ausführungsform ist der Reagenzzufluss im Medien-Steuermodul vorgesehen. Damit erfolgt der Reagenzzufluss in einem anderen Modul als der Probenanschluss. Das ist z.B. in Laborumgebungen vorteilhaft, in denen die Reagenzbehälter örtlich getrennt vom Probenbehälter angeordnet sind und durch die Zuleitung des Reagenz von oben und die Probenzuführung von unten die Länge der noch nötigen Schlauchverbindungen verringert werden kann.

In einer bevorzugten Ausführungsform ist zwischen dem Dosiermodul und dem Mischmodul eine Dichtplatte eingefügt, die Durchgangsöffnungen für die Medienkanäle der Module aufweist. Dabei ist ein Medienkanal für den Probendurchfluss vorgesehen, und ein Medienkanal verbindet den Dosierkanal mit dem Mischkanal.

Das Dosiermodul ist vorzugsweise als Platte ausgebildet, aus welcher der Dosierkanal mäanderförmig ausgespart ist. Die Platte kann zum Beispiel ein Gussteil sein. Da je nach Messaufgabe unterschiedliche Reagenzmengen injiziert werden müssen, muss der Dosierkanal in seiner Aufnahmefähigkeit dem zu injizierenden Reagenz angepasst sein. Es sind daher für das modulare Fließinjektions-Analysesystem vorzugsweise verschiedene Dosiermodule vorgesehen, die untereinander austauschbar sind und gleiche Außenabmessungen sowie gleiche Schnittstellen aufweisen. Sie unterscheiden sich in der Aufnahmekapazität des Dosierkanals, was durch unterschiedliche Länge und/oder unterschiedlichen Querschnitt des Dosierkanals erreicht werden kann. Der Dosierkanal ist vorzugsweise nach oben offen, was eine leichte Reinigung des Kanals nach einem Auseinanderbauen der einzelnen Module erlaubt. Der Dosierkanal wird in der zusammengebauten Form z.B. von dem Medien-Steuermodul abgeschlossen.

In einer bevorzugten Ausführungsform ist das Mischmodul als Platte ausgebildet, aus welcher der Mischkanal mäanderförmig ausgespart ist. Auch die Länge des Mischkanals ist abhängig von der Messaufgabe. Einige Messaufgaben erfordern einen besonders langen Mischkanal. Der Mischkanal kann verlängert werden, indem auf beiden Seiten der Mischmodul-Platte ein Mischkanal mäanderförmig ausgespart ist, wobei die beiden Mischkanalteile über eine Durchgangsöffnung miteinander verbunden sind. Sollte bei den vorgegebenen äußeren Abmessungen des Mischmoduls durch Aussparen eines Mischkanals auf beiden Seiten der Platte noch nicht die erforderliche Länge erreicht werden, so können zwei Mischmodule vorgesehen werden, die aufeinandergestapelt werden.

Eine Dichtplatte bildet eine Abdeckung des nach oben offenen Mischkanals. Diese Bauweise erlaubt eine leichte Reinigung des Kanals nach einem Auseinanderbauen der einzelnen Module.

In einer bevorzugten Ausführungsform ist das Medien-Steuermodul mit einem 3/2-Wege-Ventil ausgestattet, das den Eingang des Dosierkanals entweder mit dem Probenanschluss oder mit dem Reagenzanschluss verbindet. In einer weiteren Ausführungsform weist das Medien-Steuermodul ein weiteres 3/2-Wege-Ventil auf, das den Ausgang des Dosierkanals entweder mit dem Eingang des Mischkanals oder mit der Ableitung verbindet.

In einer Ausführungsform wird die Medienkammer des Analysemoduls von wenigstens einer optischen Messstrecke gequert. Diese optische Messstrecke kann durch eine Lichtquelle und einen optischen Fotoempfänger in an sich bekannter Weise gebildet werden. Durch die Injektion eines Reagenz wird bei der Fließinjektionsanalyse im Allgemeinen eine Dispersion des Analyten hervorgerufen, die als Trübung in der optischen Messstrecke gemessen werden kann. Es wird ein sogenanntes Konzentrationsprofil gemessen, es bildet sich ein dem Fachmann bekannter Peak-Verlauf.

In einer bevorzugten Ausführungsform ist das Dosiermodul benachbart zu dem Medien-Steuermodul und das Analysemodul benachbart zu dem Medienanschluss-Modul angeordnet, und wenigstens ein Medienkanal wird von dem Medien-Anschlussmodul ausgehend zu dem Medien-Steuermodul geführt, der alle dazwischen liegenden Module durchquert.

Vorzugsweise bilden die aufeinandergestapelten Module insgesamt einen quader- oder würfelförmigen Block.

In einer bevorzugten Ausführungsform weisen die aufeinandergestapelten Module Ausnehmungen auf, die miteinander fluchten und gemeinsam einen Aufnahmeraum bilden. Dieser Aufnahmeraum kann beispielsweise eine Elektronik aufnehmen. Diese Elektronik kann beispielsweise die Ventile und/oder die Lichtstrecke ansteuern und eine Verbindung zu einem externen Steuergerät ermöglichen. Die Elektronik kann auch eine Verarbeitung der gewonnenen Meßsignale durchführen.

In einer weiteren Ausführungsform kann das Fließinjektions-Analysesystem mehrere Mischmodule in Reihe aufweisen, die getrennte Reagenzanschlüsse aufweisen. Hierdurch ist es möglich, mit einem Probedurchlauf verschiedene Analyseaufgaben durchzuführen. Für den Reagenzzufluss kann hierbei statt der Zuführung über ein Dosiermodul auch eine andere Dosierung vorgenommen werden, beispielsweise über ein Dosierventil, eine Dosierpumpe oder durch eine Doppel-T-Injektion oder ähnliche Dosiermethoden.

Vorzugsweise ist ein zusätzliches Verbindungsmodul vorgesehen, das strömungsabwärts in Reihe mit einem Mischmodul angeordnet ist und eine Medienverbindung zu einem getrennten Modulblock herstellt. Dadurch wird es möglich, für komplexe Analyseaufgaben ein Fließinjektions-Analysesystem aus mehreren getrennten Modulblöcken herzustellen. Hierbei weist der getrennte Modulblock vorzugsweise ein weiteres Mischmodul und ein weiteres Analysemodul auf.

Weitere Vorteile und Ausgestaltungen der Erfindung werden aus der nachstehenden Beschreibung einer bevorzugten Ausführungsform deutlich werden, die anhand der Figuren erfolgt. Hierbei zeigen:
- Figur 1 in einer schematischen Explosionsdarstellung einen kompletten Modulblock;
- Figur 2 ein Medien-Steuermodul;
- Figur 3 ein Dosiermodul;
- Figur 4 eine Dichtplatte;
- Figur 5 ein Mischmodul;
- Figur 6 ein Analysemodul;
- Figur 7 ein Medien-Anschlussmodul;
- Figuren 8 bis 10 schematisch verschiedene Zusammenstellungen des modularen Fließinjektions-Analysesystems aus unterschiedlichen Modulen.

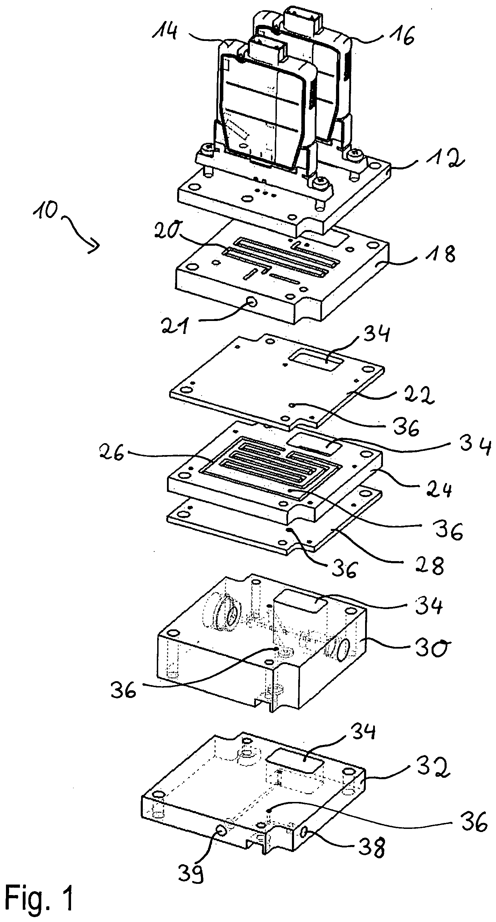

Figur 1 zeigt in Explosionsdarstellung einen erfindungsgemäßen Modulblock 10 mit einer möglichen Zusammenstellung von einer Mehrzahl von Funktionsmodulen. Ein Medien-Steuermodul 12 umfasst ein erstes 3/2-WegeVentil 14 und ein zweites 3/2-Wege-Ventil 16. Das Medien-Steuermodul 12 hat einen nicht dargestellten Reagenzanschluss zum Zuführen eines Reagenz.

Ein darunter liegendes Dosiermodul 18 hat einen mäanderförmigen Dosierkanal 20 und einen Abflussanschluss 21 für das Reagenz. Unterhalb des Dosiermoduls 18 liegt eine Dichtplatte 22. Ein darunter liegendes Mischmodul 24 weist einen ebenfalls mäanderförmigen Mischkanal 26 auf.

Unter dem Mischmodul 24 liegt eine Dichtplatte 28. An die Dichtplatte 28 schließt sich ein Analysemodul 30 mit einer nicht dargestellten Medienkammer an. In der in Figur 1 dargestellten Ausführungsform wird der Modulblock 10 von einem Medien-Anschlussmodul 32 abgeschlossen.

Alle Funktionsmodule, aus denen der Modulblock 10 zusammengesetzt ist, wie auch die zwei enthaltenen Dichtplatten, weisen in etwa die gleichen Außenabmessungen in Breite und Länge auf. Die Module sind im wesentlichen plattenförmig und haben angepasst an ihre jeweiligen Aufgaben unterschiedliche Höhen. Zusammengebaut ergibt sich ein quaderförmiger, je nach Höhe der Module auch ein würfelförmiger Modulblock. Das Material, aus dem die Module gefertigt sind, ist so gewählt, dass es den Anforderungen der Analyseaufgabe entspricht, also z.B. resistent gegenüber der Probenflüssigkeit und dem Reagenz, bzw. der Reagenzien. Zwischen den einzelnen Modulen kann eine lösbare Flächendichtung mit entsprechenden Aussparungen an den Medienübertrittsstellen vorgesehen sein oder die Dichtung wird über eine Fügetechnik realisiert.

Alle Module und Dichtplatten weisen jeweils eine Ausnehmung 34 auf, die zueinander fluchten und gemeinsam einen Aufnahmeraum bilden. In diesem kann beispielsweise eine Elektronik untergebracht werden.

Ebenfalls in Figur 1 erkennbar sind Durchgangsöffnungen 36 auf dem Medien-Anschlussmodul 32, dem Analysemodul 30, den Dichtplatten 22 und 28 und dem Mischmodul 24, die alle zueinander fluchten und einen durchgängigen Medienkanal bilden. Dieser Medienkanal ist verbunden mit einem Probenanschluss 38 an einer Seitenfläche des Medien-Anschlussmoduls 32, durch den im gezeigten Ausführungsbeispiel die Probenflüssigkeit zugeführt wird. Das Medien-Anschlussmodul 32 weist ferner einen Abfallanschluss 39 auf, an den ein nicht dargestellter Abfallbehälter angeschlossen werden kann.

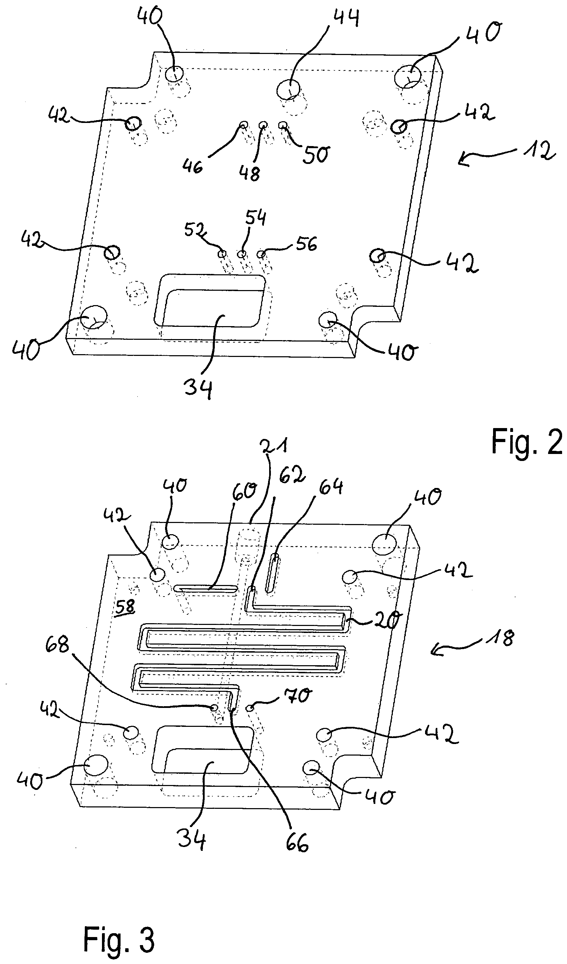

Figur 2 zeigt das Medien-Steuermodul 12 ohne die aufgesetzten 3/2-WegeVentile 14 und 16. Die Ausnehmung 34 bildet wie bereits im Zusammenhang mit Figur 1 erläutert zusammen mit den Ausnehmungen in den anderen Modulen einen Aufnahmeraum. Bohrungen 40 dienen zur Aufnahme von Befestigungsmitteln, um die einzelnen Funktionsmodule zu einem Modulblock zu verbinden. Selbstverständlich ist auch eine andere Verbindung der Module untereinander denkbar. Bohrungen 42 dienen zur Befestigung der Ventile 14 und 16.

Das Medien-Steuermodul 12 umfasst einen Reagenzanschluss 44, an dem das Reagenz über eine Reagenzienleitung zugeführt werden kann. Durchgangsöffnungen 46, 48 und 50 werden an das 3/2-Wege-Ventil 14 angeschlossen, mit dem wahlweise eine Verbindung der Durchgangsöffnungen 46 und 48 oder der Durchgangsöffnungen 48 und 50 möglich ist. Die Durchgangsöffnung 46 fluchtet mit den in Figur 1 mit 36 bezeichneten Durchgangsöffnungen, die zusammen einen Medienkanal bilden, durch den die Probenflüssigkeit vom Medien-Anschlussmodul 32 zum Medien-Steuermodul 12 geleitet wird. Die Durchgangsöffnung 48 bildet eine fluidische Verbindung zum Eingang des darunter liegenden Dosierkanals 20 im Dosiermodul 18. Der Reagenzanschluss 44 ist über einen Reagenzzufluss im Dosiermodul mit der Durchgangsöffnung 50 fluidisch verbunden.

Das 3/2-Wege-Ventil 16 steuert die Verbindung zwischen Durchgangsöffnungen 52, 54 und 56, so dass wahlweise eine Verbindung der Durchgangsöffnungen 52 und 54 oder der Durchgangsöffnungen 54 und 56 möglich ist. Durchgangsöffnung 52 bildet eine fluidische Verbindung zu einer Reagenz-Ableitung im Dosiermodul 18, Durchgangsöffnung 54 bildet eine fluidische Verbindung zum Ausgang des Dosierkanals 20, während Durchgangsöffnung 56 eine fluidische Verbindung zum Eingang des Mischkanals 26 im Mischmodul 24 bildet.

Figur 3 zeigt das unter dem Medien-Steuermodul 12 liegende Dosiermodul 18, das in Form einer Platte 58 gebildet ist. Bohrungen 40 dienen wiederum der Aufnahme von Befestigungsmitteln und Bohrungen 42 dienen wie beim Medien-Steuermodul 12 zur Befestigung der Ventile 14 und 16. Medien-Steuermodul 12 und Dosiermodul 18 bilden zusammen ein Injektionsmodul. Der Dosierkanal 20 ist in Richtung Medien-Steuermodul 12 offen und wird von diesem nach oben begrenzt. Im auseinandergebauten Zustand ist damit der Dosierkanal 20 frei zugänglich und kann leicht gereinigt werden. In der vorliegenden Ausführungsform ist der Dosierkanal 20 mäanderförmig in der Platte 58 ausgespart. In anderen Ausführungen des Dosiermoduls 18 kann der Dosierkanal 20 auf der kürzesten Strecke durch das Dosiermodul geführt werden. Wenn eine Verlängerung des Dosierkanals und damit eine Vergrößerung des Reagenzvolumens gewünscht ist, so kann der Dosierkanal in mehr Schleifen geführt werden, bzw. sein Querschnitt kann vergrößert werden. Damit kann der Modulblock 10 je nach Anforderung mit unterschiedlichen Dosiermodulen ausgestattet werden.

Ein Probenzufluss 60 steht in fluidischer Verbindung mit der Durchgangsöffnung 46 des Medien-Steuermoduls 12. Ein Eingang 62 des Dosierkanals 20 steht in fluidischer Verbindung zur Durchgangsöffnung 48 des Medien-Steuermoduls 12. Ein Reagenzzufluss 64 steht in fluidischer Verbindung zur Durchgangsöffnung 50 des Medien-Steuermoduls 12. Über das Ventil 14 kann entweder der Probenzufluss 60 oder der Reagenzzufluss 64 mit dem Eingang 62 des Dosierkanals 20 verbunden werden.

Ein Ausgang 66 des Dosierkanals 20 steht in fluidischer Verbindung mit der Durchgangsöffnung 54 des Medien-Steuermoduls 12. Eine Reagenz-Ableitung 68 steht in fluidischer Verbindung zur Durchgangsöffnung 52 des Medien-Steuermoduls 12 und bietet einen Durchgang zum Abflussanschluss 21 für das Reagenz, der in Figur 3 nicht sichtbar ist. Eine Durchgangsöffnung 70 steht in fluidischer Verbindung zur Durchgangsöffnung 56 des Medien-Steuermoduls 12 und bietet einen Durchgang zum Eingang des Mischkanals 26 im Mischmodul 24.

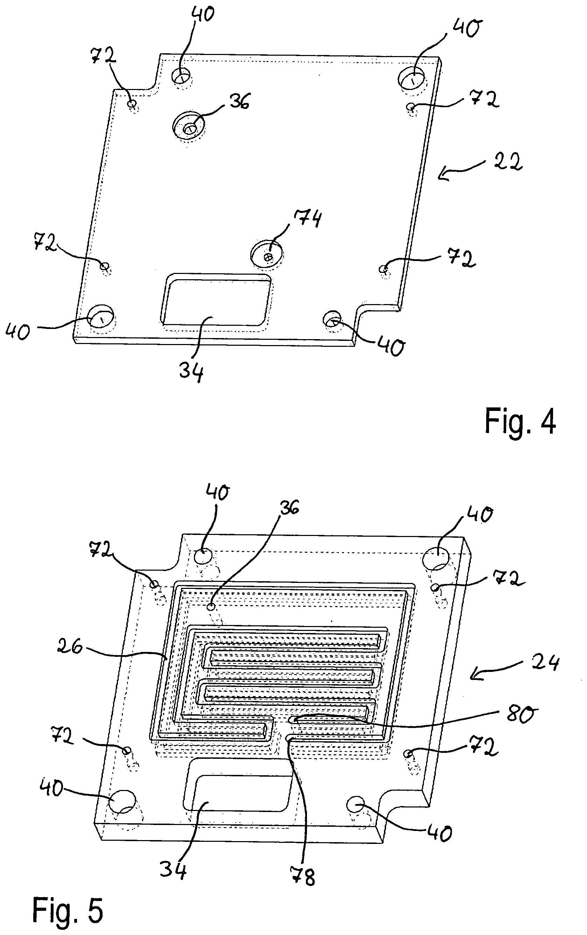

Figur 4 zeigt die Dichtplatte 22, die wiederum Bohrungen 40 zur Aufnahme für Befestigungsmittel, die den gesamten Modulblock zusammenhalten, aufweist. Die Dichtplatte 22 weist weiterhin Bohrungen 72 auf, die zur Aufnahme von Befestigungsmitteln dienen, mit denen die Dichtplatte 22 mit dem darunter liegenden Mischmodul 24 und gegebenenfalls mit einer unter dem Mischmodul 24 liegenden weiteren Dichtplatte 28 zusammengehalten wird. Auch die Dichtplatte 22 weist selbstverständlich die Ausnehmung 34 zum Bilden eines Aufnahmeraums auf. Die Dichtplatte hat die Funktion den darunter liegenden Mischkanal oder auch Mischstrecke 26, die im Mischmodul ausgespart ist, nach oben zu begrenzen. Eine Durchgangsöffnung 74 steht in fluidischer Verbindung mit der Durchgangsöffnung 70 des Dosiermoduls 18 und bildet einen Durchgang zum Eingang der Mischstrecke 26. Die Durchgangsöffnung 36 steht in fluidischer Verbindung zum Probenzufluss 60 und bildet wie bereits mit Bezug zu Figur 1 erläutert mit weiteren Durchgangsöffnungen 36 in darunter liegenden Modulen einen Medienkanal zum Probenanschluss 38.

Das in Figur 5 dargestellte Mischmodul 24 ist durch eine Platte gebildet, in der der Mischkanal 26 ausgespart ist. Das Mischmodul 24 weist ferner wiederum eine Ausnehmung 34 auf, sowie Bohrungen 40 und Bohrungen 72, die wie bereits ausgeführt Befestigungszwecken dienen.

Der Mischkanal 26 ist ähnlich wie der Dosierkanal 20 mäanderförmig ausgebildet. Die Länge des Mischkanals kann durch die Führung des Kanals in mehr oder weniger Schleifen variiert werden. Wenn die so erzielbare Länge des Mischkanals 26 für den vorgesehenen Analysezweck nicht ausreichend ist, so kann auf der gegenüberliegenden Seite des Mischmoduls ebenfalls ein Mischkanal ausgespart werden.

Ein Eingang 78 des Mischkanals 26 steht in fluidischer Verbindung zur Durchgangsöffnung 74 in der Dichtplatte 22. Ein Ausgang 80 des Mischkanals 26 steht in fluidischer Verbindung zu einem Eingang des darunter liegenden Analysemoduls 30, wenn die Länge des Mischkanals 26 auf nur einer Seite der Platte ausreichend ist. Wird eine längere Mischstrecke benötigt, so führt der Ausgang 80 des Mischkanals 26 auf der dargestellten Seite des Mischmoduls 24 zu einem zweiten Teil des Mischkanals 26, der auf der Rückseite der Platte ausgespart ist. Der Ausgang des Mischkanals 26 auf der gegenüberliegenden Seite ist dann mit dem Eingang des Analysemoduls 30 fluidisch verbunden. Die zwei Teile des Mischkanals 26 sind also hintereinander geschaltet.

Für den Fall, dass das Mischmodul 26 auch auf der Rückseite einen Mischkanal aufweist, ist eine zweite Dichtplatte 28 vorgesehen, die den Mischkanal begrenzt. Für Analyseaufgaben, die eine Mischstrecke erfordern, die bei Zugrundelegen der vorgesehenen Außenabmessungen des Mischmoduls nicht auf den beiden Seiten einer Mischmodulplatte realisierbar ist, können zwei Mischmodule übereinander gelegt werden, die durch eine Dichtplatte getrennt sind. Das zweite Mischmodul kann dann je nach Bedarf wiederum einen Kanal nur auf einer Seite oder aber auf beiden Seiten einen Kanal aufweisen. Damit ist es möglich, den Modulblock mit unveränderten Breiten- und Längenabmessungen für verschiedene Analysezwecke auszubauen.

Das Mischmodul 24 weist ferner ebenfalls eine Durchgangsöffnung 36 auf, die in fluidischer Verbindung mit der Durchgangsöffnung 36 der Dichtplatte 22 steht und einen Medienkanal zum Probenanschluss 38 bildet.

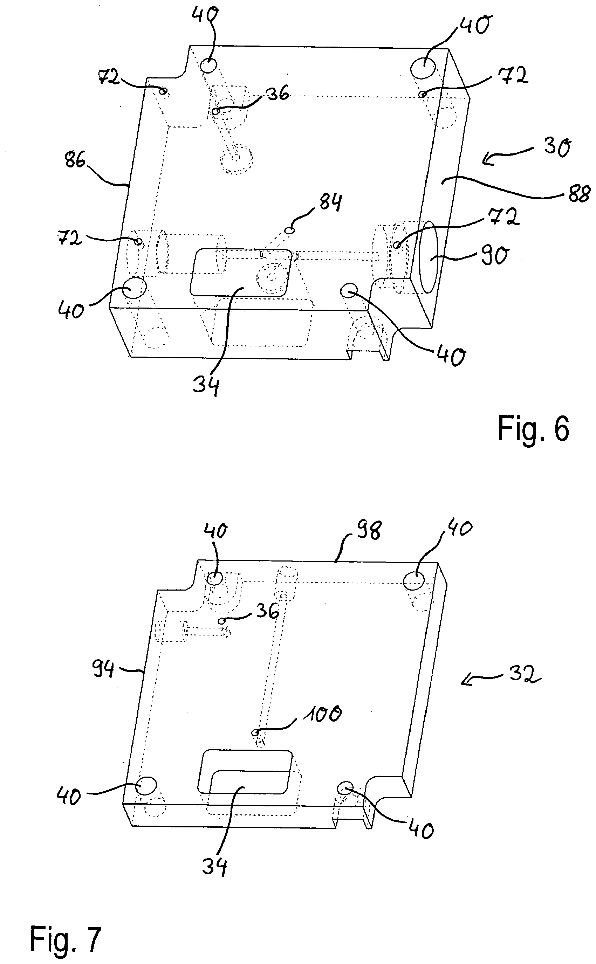

Figur 6 zeigt das Analysemodul 30 mit einer Ausnehmung 34, Bohrungen 40 und Bohrungen 72. Ein Eingang 84 steht in fluidischer Verbindung zum Ausgang 80 des Mischkanals 26 im Mischmodul 24. Durch den Eingang 84 gelangt die durch das Mischmodul 26 geströmte Flüssigkeit in eine nicht dargestellte Medienkammer des Analysemoduls 30. Die Medienkammer wird von einer optischen Messstrecke durchquert. Hierzu befindet sich an einer Schmalseite 86 des Analysemoduls 30 eine Lichtquelle, die beispielsweise durch eine LED gebildet sein kann. Auf einer gegenüberliegenden Schmalseite 88 des Analysemoduls 30 ist ein Fotoempfänger 90 angeordnet. Zwischen der Lichtquelle und dem Fotoempfänger liegt die optische Messstrecke. Bei der Fließinjektions-Analyse reagiert das Reagenz mit der Probe dergestalt, dass es zu einer Trübung oder Farbänderung kommt. Dadurch verändern sich die optischen Eigenschaften des Mediums, welches sich in der optischen Meßstrecke befindet, und ein dem Fachmann wohlbekannter Peak-Verlauf im Empfangssignal des Fotoempfängers ist die Folge.

Je nach Messaufgabe kann das modulare Fließinjektions-Analysesystem auch mit einem anderen Analysemodul ausgerüstet werden. Zum Beispiel kann das Analysemodul auch elektrochemische Sensoren, Leitfähigkeitssensoren oder andere Analyse-übliche Sensoren beinhalten.

Auch andere Verfahren zur Probenaufbereitung oder andere Verfahrensschritte wie die Extraktion, Gasdiffussionszellen oder Dialysezellen können als eigene Module eingebettet werden.

Eine Durchgangsöffnung 36 steht wiederum in fluidischer Verbindung mit der Durchgangsöffnung 36 im Mischmodul 24 und ist Teil des Medienkanals zum Probenanschluss 38.

Figur 7 zeigt das Medien-Anschlussmodul 32, das ebenfalls Bohrungen 40 und eine Ausnehmung 34 aufweist. An einer Seitenfläche 94 ist der Probenanschluss 38 für die Probenflüssigkeit vorgesehen, der in Figur 7 nicht sichtbar ist. Der Probenanschluss 38 steht in fluidischer Verbindung mit einer Durchgangsöffnung 36, die wiederum in fluidischer Verbindung mit der Durchgangsöffnung 36 im Analysemodul 30 steht.

An einer Seitenfläche 98 ist die Medien-Ableitung 39 für einen Anschluss an einen Abfallbehälter vorgesehen, die ebenfalls in Figur 7 nicht sichtbar ist. Selbstverständlich könnten der Probenanschluss und die Medien-Ableitung auch an einer anderen Seitenfläche oder auch an der Rückseite vorgesehen sein. Die Anordnung an Seitenflächen hat den Vorteil, dass der Modulblock 10 mit dem Medien-Anschlussmodul 32 auf einer ebenen Fläche aufgestellt werden kann und die Zu- und Abflüsse an der Seite erfolgen. Es ist auch möglich, völlig auf ein Medien-Anschlussmodul zu verzichten und den Probenanschluss beispielsweise im Injektionsmodul und die Medien-Ableitung beispielsweise im Analysemodul vorzusehen.

Eine Durchgangsöffnung 100 steht in fluidischer Verbindung zu einem Ausgang der Medienkammer des Analysemoduls 30 und innerhalb des Medien-Anschlussmoduls 32 in fluidischer Verbindung mit der Medien-Ableitung 39.

Im Betrieb sind die einzeln erläuterten Module, das heißt das Medien-Steuermodul 12, das Dosiermodul 18, die Dichtplatte 22, das Mischmodul 24, gegebenenfalls mit einer Dichtplatte 28, das Analysemodul 30 sowie das Medien-Anschlussmodul 32 aufeinander gestapelt und durch die fluchtenden Bohrungen 40 sind Befestigungsmittel gesteckt, die den Modulstapel als Modulblock 10 zusammenhalten.

Zuvor können die Dichtplatten 22 und 28 sowie das Mischmodul 24 und das Analysemodul 30 zusätzlich untereinander über die fluchtenden Bohrungen 72 mittels Befestigungsmittel miteinander verbunden werden. Die Ausnehmungen 34 fluchten ebenfalls und bilden zusammen einen Aufnahmeraum, in den eine Elektronikbaugruppe eingefügt werden kann, die z.B. zur Steuerung des Modulblocks 10 und für die Analyseauswertung genutzt wird. Die Steuerelektronik kann auch eine Verbindung zu einem übergeordneten Steuergerät bieten. Auch ein Anschluss an das Internet ist möglich, womit die Analyseauswertung on-line an einem anderen Ort möglich wird.

Die aufeinander gestapelten Module haben in dieser Ausbauform im wesentlichen würfelförmige Abmessungen, das heißt, der Modulblock 10 hat die gleiche Breite wie Länge wie Höhe. Hinzu kommen die oben aufgesetzten Ventile 14 und 16. Der handliche Modulblock 10 kann auf einer Fläche aufgestellt werden, wobei die zu untersuchende Probe, im vorliegenden Beispiel Trinkwasser, über einen Anschluss im Medien-Anschlussmodul 32 seitlich über einen Schlauch zugeführt wird. Die Probe durchquert den gesamten Modulblock 10, ausgehend von dem Probenanschluss 38 über den durch die Durchgangsöffnungen 36 im Analysemodul 30, in der Dichtplatte 28, im Mischmodul 24 und in der Dichtplatte 22 gebildeten Medienkanal zum Probenzufluss 60 im Dosiermodul 18. Das Reagenz wird von oben über den Reagenzanschluss 44 im Medien-Steuermodul 12 in den Reagenzzufluss 64 geleitet.

Eine Messung beginnt beispielsweise zunächst mit einer Referenzmessung ohne injizierte Reagenz. Hierzu schaltet das Ventil 14 den Probenzufluss 60 auf den Eingang 62 des Dosierkanals 20 und das Ventil 16 schaltet den Dosierkanalausgang 66 auf die Durchgangsöffnung 70, die mit dem Eingang 78 des Mischkanals 26 in fluidischer Verbindung ist. Die Probe wird über eine nicht im Modulblock 10 enthaltene Pumpe oder über Vordruck in den Modulblock 10 befördert. Dabei ist eine möglichst konstante Durchflussmenge einzuhalten. Die Probe fließt über den Dosierkanal 20 in den Mischkanal 26 und über den Ausgang des Mischkanals in die Medienkammer des Analysemoduls 30. In der Fotostrecke zwischen der Lichtquelle und dem Fotoempfänger 90 befindet sich dann nur die Probe, und eine Referenzmessung kann erfolgen. Die Probe verlässt die Medienkammer im Analysemodul 30 und fließt im Medien-Anschlussmodul 32 von der Durchgangsöffnung 100 zur Medien-Ableitung 39 in der Seitenwand 98 und dann in den Abfallbehälter. Die Probe durchquert damit den gesamten Modulblock auch von oben nach unten durch einen zweiten Medienkanal, gebildet aus Dosierkanal, Mischkanal und Medienkammer und den jeweils dazwischen liegenden Durchgangsöffnungen.

Zum Injizieren eines Reagenz werden das Ventil 14 und das Ventil 16 geschaltet, so dass der Reagenzzufluss 64 mit dem Eingang 62 des Dosierkanals 20 verbunden ist und der Ausgang 66 des Dosierkanals 20 mit der Reagenz-Ableitung 68 verbunden ist, die in fluidischer Verbindung zum Abflussanschluss 21 für das Reagenz steht.

Das Reagenz wird z.B. mit einer Pumpe in den Dosierkanal 20 geleitet, bis dieser komplett gespült ist. Dabei ist die Injektionsmenge über die Dosierkanallänge und den Dosierkanalquerschnitt definiert. Um sicherzustellen, dass der Dosierkanal 20 komplett gespült wird, wird überschüssiges Reagenz über die Reagenz-Ableitung 68 zum Abflussanschluss 21 und von dort aus dem Modulblock 10 hinausgeführt.

Danach werden die Ventile 14 und 16 beide geschaltet. Damit wird wieder die Probe an den Dosierkanaleingang 62 gelegt, und der Dosierkanalausgang 66 wird mit dem Eingang 70 des Mischkanals 26 verbunden. Die Probe spült das Reagenz durch die Mischstrecke bzw. den Mischkanal 26 in die Medienkammer des Analysemoduls 30, das im dargestellten Beispiel mit seiner optischen Messstrecke ein Durchflussfotometer darstellt. Hier wird zeitabhängig die Extinktion bestimmt. Die Messauswertung ergibt das typische Peak-Profil, das nach den üblichen Methoden der Fließinjektions-Analyse auch automatisch ausgewertet werden kann. Probe und Reagenz verlassen über die Medien-Ableitung 39 im Medien-Anschlussmodul 32 den Modulblock 10.

Das Fließinjektions-Analysesystem kann als on-line-Analysegerät betrieben werden, wobei durch die Ansteuerung intervallgesteuert Proben aus einem Reservoir genommen und automatisch analysiert werden. Die Entnahme kann mittels einer Probenentnahme-Einheit realisiert sein. Die Analyse kann aber auch für jede Probe einzeln erfolgen (z.B. Autosampler) und hierfür aus einem Gefäß gepumpt werden. Der Modulblock 10 erlaubt sowohl die Fließinjektions-Analyse als auch die sogenannte invertierte (reversed) Fließinjektions-Analyse. Im ersten Fall wird der Probe ein Reagenz injiziert, die Probe bildet den sogenannten Trägerstrom, im zweiten Fall wird dem Reagenz die Probe injiziert, das Reagenz bildet den sogenannten Trägerstrom. Hierzu muss also das Reagenz beim Probenanschluss 38 eingespeist werden und die Probe am Reagenzanschluss 44. Ansonsten bleibt der Ablauf wie beschrieben.

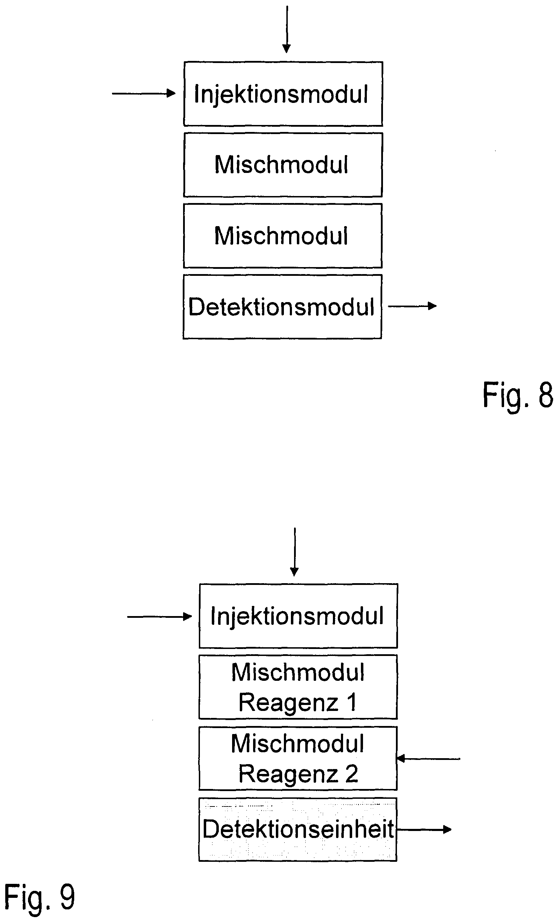

Figur 8 zeigt rein schematisch eine weitere mögliche Kombination von Funktionsmodulen in einem Modulblock. Ein Injektionsmodul bestehend aus Medien-Steuermodul mit aufgesetzten Ventilen und Dosiermodul hat zwei Anschlüsse, einen für den Zufluss des Reagenz und einen für den Zufluss der Probe, wobei Reagenz oder Probe als Trägerstrom dienen. Der Trägerstrom kann wie in den Figuren 1 bis 7 geschildert unten im Modulblock eingespeist werden. Es ist aber auch eine Ausführungsform vorgesehen, in der ein Anschluss am Medien-Steuermodul für den Trägerstrom vorgesehen ist.

Der Aufbau gemäß Figur 8 enthält zwei Mischmodule, um eine besonders lange Mischstrecke zu bilden. Die beiden Mischmodule enthalten vorzugsweise jeweils einen Mischkanal auf der Ober- und auf der Unterseite und sind übereinander gestapelt. Das unterste Modul ist ein Detektionsmodul, das aus einem Analysemodul 30 und einem Medien-Anschlussmodul 32 zusammengesetzt sein kann. Nach der Analyse werden die Probe und das Reagenz in einen Abfallbehälter abgegeben.

Figur 9 zeigt rein schematisch ein Beispiel für den Aufbau eines Modulblocks 10 für ein Verfahren, das mit mehreren Reagenzien arbeitet. Als Oberstes ist wiederum ein Injektionsmodul vorgesehen, bestehend aus einem Medien-Steuermodul mit zwei Ventilen und einem Dosiermodul. Auch in diesem schematischen Beispiel ist die Einspeisung des Reagenz und der Probe im Injektionsmodul angedeutet. Darunter ist wiederum ein Mischmodul, in dem die Probe und das Reagenz 1 in einer Mischstrecke zusammengeführt werden. Auf das erste Mischmodul folgt ein zweites Mischmodul mit einem zweiten Mischkanal. Dieses zweite Mischmodul ist in diesem Fall keine Verlängerung der Mischstrecke, sondern diesem Mischmodul wird von außen ein zweites Reagenz zugeführt. Die Zuführung dieses Reagenz kann aktiv über eine Dosierpumpe oder ein Dosierventil erfolgen. In der darunter liegenden Detektionseinheit erfolgt die eigentliche Analyse. Die Detektionseinheit ist wiederum mit einem Anschluss zum Abfallbehälter zum Abführen der Probe und der Reagenzien 1 und 2 versehen.

Ist z.B. die vorgesehene Bauhöhe beschränkt oder sollen vorhandene Module in neuer Kombination eingesetzt werden, so besteht eine weitere Ausführungsform darin, das Fließinjektions-Analysesystem aus mehreren Modulblöcken aufzubauen. Dabei ist ein Verbindungsmodul vorgesehen, das strömungsabwärts in Reihe mit einem Mischmodul angeordnet ist und eine Medienverbindung zu einem getrennten Modulblock herstellt.

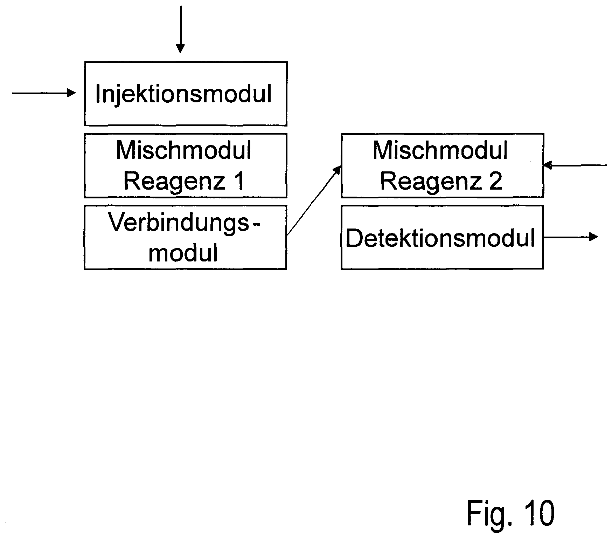

Figur 10 zeigt in bekannter Weise wieder ein Injektionsmodul, dem ein erstes Reagenz beispielsweise als Trägerstrom und eine Probe zugeführt wird. In einem darunter angeordneten Mischmodul werden Probe und Reagenz 1 zusammengebracht. Im Gegensatz zu der Darstellung in Figur 9 ist das Mischmodul mit dem Reagenz 1 nicht auf ein weiteres Mischmodul mit dem Reagenz 2 gestapelt, sondern als unterstes Modul findet sich im Modulblock 1 ein Verbindungsmodul. Dieses hat einen Anschluss nach außen, an den ein Schlauch angeschlossen werden kann. Dieser Schlauch bietet eine Medienverbindung zu einem Eingangsanschluss eines zweiten Mischmoduls, dem ein Reagenz 2 zugeführt wird. Das Mischmodul mit dem Reagenz 2 ist auf ein Detektionsmodul aufgebaut, das wie in Figur 9 die Analyse der beiden Reagenz-Reaktionen durchführt und einen Anschluss nach außen zum Abfallbehälter hat. Der Unterschied zwischen Figur 9 und 10 liegt lediglich in dem getrennten Aufbau, der es ermöglicht, eine vorgegebene Bauhöhe nicht zu überschreiten.

## Patentansprüche

1. Modulares Fließinjektions-Analysesystem mit einem Probenzufluss (60), einem Reagenzzufluss (64) und einer Medien-Ableitung (39), gebildet aus einer Mehrzahl von aufeinandergestapelten Funktionsmodulen, wobei die Funktionsmodule wenigstens umfassen:
a) ein Dosiermodul (18) mit einem Dosierkanal (20), der einen Eingang (62) und einen Ausgang (66) hat,
b) ein Mischmodul (24) mit einem Mischkanal (26), der einen Eingang (78) und einen Ausgang (80) hat,
c) ein Analysemodul (30) mit einer Medienkammer, die mit dem Ausgang (80) des Mischkanals (26) verbunden ist,
d) ein Medien-Steuermodul (12);
wobei die Module miteinander fluchtende Durchgangsöffnungen (36) aufweisen, die einen durchgängigen Medienkanal bilden, durch den die Module verbunden sind, wobei der Medienkanal mit einem Probenanschluss (38) verbunden ist;
wobei das modulare Fließinjektions-Analysesystem **dadurch gekennzeichnet, dass**
- eine Injektionsmenge eines Reagenz durch eine Länge und einen Querschnitt des Dosierkanals (20) bestimmt ist;
- das Medien-Steuermodul (12) ventilgesteuert selektiv den Probenzufluss (60) oder den Reagenzzufluss (64) mit dem Eingang (62) des Dosierkanals (20) des Dosiermoduls (18) verbindet;
- das Medien-Steuermodul (12) ventilgesteuert selektiv den Ausgang (66) des Dosierkanals (20) mit dem Eingang (78) des Mischkanals (26) oder mit einer Reagenz-Ableitung (68) verbindet;
- das Medien-Steuermodul (12) dazu geeignet ist, eine bestimmte Reagenzmenge dadurch abzumessen, dass der Reagenzzufluss (64) zum Eingang (62) des Dosierkanals (20) gesteuert wird, und der Ausgang (66) des Dosierkanals (20) mit einer Reagenz-Ableitung (68) für eine Zeitdauer verbunden wird, die sicherstellt, dass der Dosierkanal (20) vollständig mit Reagenz gefüllt ist.

2. Modulares Fiießinjektions-Analysesystem nach Anspruch 1, ferner mit einem Medien-Anschlussmodul (32), das den Probenanschluss (38) und die Medien-Ableitung (39) aufweist.

3. Modulares Fließinjektions-Analysesystem nach Anspruch 1 oder 2, wobei das Medien-Steuermodul (12) einen Reagenzanschluss (44) aufweist.

4. Modulares Fließinjektions-Analysesystem nach einem der vorstehenden Ansprüche, bei dem zwischen Dosiermodul (18) und Mischmodul (24) eine Dichtplatte (22) eingefügt ist, die Durchgangsöffnungen (36, 74) für die Medienkanäle der Module aufweist.

5. Modulares Fließinjektions-Analysesystem nach einem der vorstehenden Ansprüche, bei dem das Dosiermodul (18) als Platte (58) ausgebildet ist, aus welcher der Dosierkanal (20) mäanderförmig ausgespart ist.

6. Modulares Fließinjektions-Analysesystem nach einem der vorstehenden Ansprüche, bei dem das Mischmodul (24) als Platte ausgebildet ist, aus welcher der Mischkanal (26) mäanderförmig ausgespart ist.

7. Modulares Fließinjektions-Analysesystem nach einem der vorstehenden Ansprüche, bei dem zwischen Mischmodul (24) und Analysemodul (30) eine Dichtplatte (28) eingefügt ist, die Durchgangsöffnungen für die Medienkanäle der Module aufweist.

8. Modulares Fließinjektions-Analysesystem nach einem der vorstehenden Ansprüche, bei dem das Medien-Steuermodul (12) ein 3/2-Wege-Ventil (14) aufweist, das den Eingang (62) des Dosierkanals (20) entweder mit dem Probenzufluss (60) oder mit dem Reagenzzufluss (64) verbindet.

9. Modulares Fließinjektions-Analysesystem nach einem der vorstehenden Ansprüche, bei dem das Medien-Steuermodul (12) ein 3/2-Wege-Ventil (16) aufweist, das den Ausgang (66) des Dosierkanals (20) entweder mit dem Eingang (78) des Mischkanals (26) oder mit der Reagenz-Ableitung (68) verbindet.

10. Modulares Fließinjektions-Analysesystem nach einem der vorstehenden Ansprüche, bei dem die Medienkammer des Analysemoduls (30) von wenigstens einer optischen, elektrochemischen oder physikalischen Messstrecke gequert wird.

11. Modulares Fließinjektions-Analysesystem nach einem der Ansprüche 2 bis 10, bei dem das Dosiermodul (18) benachbart zu dem Medien-Steuermodul (12) und das Analysemodul (30) benachbart zu dem Medien-Anschlussmodul (32) angeordnet ist, wobei wenigstens ein Medienkanal von dem Medien-Anschlussmodul (32) ausgehend zu dem Medien-Steuermodul (12) geführt ist und alle dazwischenliegenden Module durchquert.

12. Modulares Fließinjektions-Analysesystem nach einem der vorstehenden Ansprüche, bei dem die aufeinandergestapelten Module insgesamt einen quader- oder würfelförmigen Block bilden.

13. Modulares Fließinjektions-Analysesystem nach einem der vorstehenden Ansprüche, bei dem die aufeinandergestapelten Module Ausnehmungen (34) aufweisen, die miteinander fluchten und gemeinsam einen Aufnahmeraum bilden.

14. Modulares Fließinjektions-Analysesystem nach einem der vorstehenden Ansprüche, bei dem Reagenzanschluss (44) und Probenanschluss (38) bedarfsweise austauschbar sind.

15. Modulares Fließinjektions-Analysesystem nach einem der vorstehenden Ansprüche, bei dem mehrere Mischmodule (24) in Reihe angeordnet sind und über getrennte Reagenzanschlüsse verfügen.

16. Modulares Fließinjektions-Analysesystem nach einem der vorstehenden Ansprüche, mit einem zusätzlichen Verbindungsmodul, das strömungsabwärts in Reihe mit einem Mischmodul angeordnet ist und eine Medienverbindung zu einem getrennten Modulblock herstellt.

17. Modulares Fließinjektions-Analysesystem nach Anspruch 16, bei dem der getrennte Modulblock ein weiteres Mischmodul und ein Analysemodul aufweist.

## Claims

1. A modular flow injection analysis system including a sample feed (60), a reagent feed (64) and a media discharge line (39), formed of a plurality of functional modules stacked on top of one another, the functional modules comprising at least:
a) a dosing module (18) with a dosing channel (20) having an inlet (62) and an outlet (66),
b) a mixing module (24) with a mixing channel (26) having an inlet (78) and an outlet (80),
c) an analysis module (30) with a media chamber connected to the outlet (80) of the mixing channel (26),
d) a media control module (12);
wherein the modules include passage openings (36) that are aligned with one another and form a continuous media channel through which the modules are connected, the media channel being connected to a sample port (38);
the modular flow injection analysis system being **characterized in that**
- an injection quantity of a reagent is determined by a length and a cross section of the dosing channel (20);
- the media control module (12) selectively connects the sample feed (60) or the reagent feed (64) to the inlet (62) of the dosing channel (20) of the dosing module (18) in a valve-controlled manner;
- the media control module (12) selectively connects the outlet (66) of the dosing channel (20) to the inlet (78) of the mixing channel (26) or to a reagent discharge line (68) in a valve-controlled manner;
- the media control module (12) is adapted to measure a determined reagent quantity by controlling the reagent feed (64) to the inlet (62) of the dosing channel (20) and connecting the outlet (66) of the dosing channel (20) to a reagent discharge line (68) for a time period which ensures that the dosing channel (20) is completely filled with reagent.

2. The modular flow injection analysis system according to claim 1, further including a media port module (32) which includes the sample port (38) and the media discharge line (39).

3. The modular flow injection analysis system according to claim 1 or 2, wherein the media control module (12) includes a reagent port (44).

4. The modular flow injection analysis system according to any one of the preceding claims, in which a sealing plate (22) which includes passage openings (36, 74) for the media channels of the modules is interposed between the dosing module (18) and the mixing module (24).

5. The modular flow injection analysis system according to any one of the preceding claims, in which the dosing module (18) is configured as a plate (58) which has the dosing channel (20) recessed therein in a meander shape.

6. The modular flow injection analysis system according to any one of the preceding claims, in which the mixing module (24) is configured as a plate which has the mixing channel (26) recessed therein in a meander shape.

7. The modular flow injection analysis system according to any one of the preceding claims, in which a sealing plate (28) which includes passage openings for the media channels of the modules is interposed between the mixing module (24) and the analysis module (30).

8. The modular flow injection analysis system according to any one of the preceding claims, in which the media control module (12) includes a 3/2-way valve (14) connecting the inlet (62) of the dosing channel (20) to either the sample feed (60) or the reagent feed (64).

9. The modular flow injection analysis system according to any one of the preceding claims, in which the media control module (12) includes a 3/2-way valve (16) connecting the outlet (66) of the dosing channel (20) to either the inlet (78) of the mixing channel (26) or the reagent discharge line (68).

10. The modular flow injection analysis system according to any one of the preceding claims, in which the media chamber of the analysis module (30) is crossed by at least one optical, electrochemical or physical measuring path.

11. The modular flow injection analysis system according to any one of claims 2 to 10, in which the dosing module (18) is arranged adjacent to the media control module (12) and the analysis module (30) is arranged adjacent to the media port module (32), wherein at least one media channel is led starting from the media port module (32) to the media control module (12) while crossing all modules arranged therebetween.

12. The modular flow injection analysis system according to any one of the preceding claims, in which the entirety of the stacked modules forms a cuboid or cube-shaped block.

13. The modular flow injection analysis system according to any one of the preceding claims, in which the stacked modules include recesses (34) which are aligned with one another and together form a receiving space.

14. The modular flow injection analysis system according to any one of the preceding claims, in which the reagent port (44) and the sample port (38) are interchangeable as required.

15. The modular flow injection analysis system according to any one of the preceding claims, in which multiple mixing modules (24) are arranged in series and have separate reagent ports.

16. The modular flow injection analysis system according to any one of the preceding claims, including an additional connection module which is arranged in series downstream of a mixing module and establishes a media connection to a separate module block.

17. The modular flow injection analysis system according to claim 16, in which the separate module block includes a further mixing module and an analysis module.

## Revendications

1. Système modulaire d'analyse par injection en flux, comprenant une amenée d'échantillon (60), une amenée de réactif (64) et une évacuation d'agents (39), formé par une pluralité de modules fonctionnels empilés les uns sur les autres, les modules fonctionnels comprenant au moins :
a) un module de dosage (18) comprenant un canal de dosage (20) qui présente une entrée (62) et une sortie (66),
b) un module de mélange (24) comprenant un canal de mélange (26) qui présente une entrée (78) et une sortie (80),
c) un module d'analyse (30) comprenant une chambre d'agents qui est reliée à la sortie (80) du canal de mélange (26),
d) un module de commande d'agents (12) ;
les modules présentant des orifices de passage (36) qui sont alignés les uns sur les autres et qui forment un canal d'agents continu au moyen duquel les modules sont reliés, le canal d'agents étant relié à un raccord d'échantillon (38) ;
le système modulaire d'analyse par injection en flux étant **caractérisé en ce que**
- une quantité d'injection d'un réactif est déterminée par une longueur et une section transversale du canal de dosage (20) ;
- le module de commande d'agents (12) relie de manière sélective l'amenée d'échantillon (60) ou l'amenée de réactif (64) à l'entrée (62) du canal de dosage (20) du module de dosage (18) par commande par soupape ;
- le module de commande d'agents (12) relie de manière sélective la sortie (66) du canal de dosage (20) à l'entrée (78) du canal de mélange (26) ou à une évacuation de réactif (68) par commande par soupape ;
- le module de commande d'agents (12) est apte à mesurer une quantité de réactif déterminée en commandant l'amenée de réactif (64) vers l'entrée (62) du canal de dosage (20), et en reliant la sortie (66) du canal de dosage (20) à une évacuation de réactif (68) pour une durée qui assure que le canal de dosage (20) est entièrement rempli de réactif.

2. Système modulaire d'analyse par injection en flux selon la revendication 1, comprenant en outre un module de raccordement d'agents (32) qui présente le raccord d'échantillon (38) et l'évacuation d'agents (39).

3. Système modulaire d'analyse par injection en flux selon la revendication 1 ou 2, le module de commande d'agents (12) présentant un raccord de réactif (44).

4. Système modulaire d'analyse par injection en flux selon l'une des revendications précédentes, dans lequel une plaque d'étanchéité (22) qui présente des orifices de passage (36, 74) pour les canaux d'agents des modules est insérée entre le module de dosage (18) et le module de mélange (24).

5. Système modulaire d'analyse par injection en flux selon l'une des revendications précédentes, dans lequel le module de dosage (18) est réalisé sous forme de plaque (58) dans laquelle le canal de dosage (20) est évidé en méandre.

6. Système modulaire d'analyse par injection en flux selon l'une des revendications précédentes, dans lequel le module de mélange (24) est réalisé sous forme de plaque dans laquelle le canal de mélange (26) est évidé en méandre.

7. Système modulaire d'analyse par injection en flux selon l'une des revendications précédentes, dans lequel une plaque d'étanchéité (28) qui présente des orifices de passage pour les canaux d'agents des modules est insérée entre le module de mélange (24) et le module d'analyse (30).

8. Système modulaire d'analyse par injection en flux selon l'une des revendications précédentes, dans lequel le module de commande d'agents (12) présente une soupape à 3/2 voies (14) qui relie l'entrée (62) du canal de dosage (20) soit à l'amenée d'échantillon (60), soit à l'amenée de réactif (64).

9. Système modulaire d'analyse par injection en flux selon l'une des revendications précédentes, dans lequel le module de commande d'agents (12) présente une soupape à 3/2 voies (16) qui relie la sortie (66) du canal de dosage (20) soit à l'entrée (78) du canal de mélange (26), soit à l'évacuation de réactif (68).

10. Système modulaire d'analyse par injection en flux selon l'une des revendications précédentes, dans lequel la chambre d'agents du module d'analyse (30) est traversée par au moins une voie de mesure optique, électrochimique ou physique.

11. Système modulaire d'analyse par injection en flux selon l'une des revendications 2 à 10, dans lequel le module de dosage (18) est agencé adjacent au module de commande d'agents (12), et le module d'analyse (30) est agencé adjacent au module de raccord d'agents (32), au moins un canal d'agents étant guidé vers le module de commande d'agents (12) à partir du module de raccordement d'agents (32) et traversant tous les modules intermédiaires.

12. Système modulaire d'analyse par injection en flux selon l'une des revendications précédentes, dans lequel les modules empilés les uns sur les autres forment dans l'ensemble un bloc parallélépipédique ou cubique.

13. Système modulaire d'analyse par injection en flux selon l'une des revendications précédentes, dans lequel les modules empilés les uns sur les autres présentent des évidements (34) qui sont alignés les uns sur les autres et qui forment ensemble un espace de réception.

14. Système modulaire d'analyse par injection en flux selon l'une des revendications précédentes, dans lequel le raccord de réactif (44) et le raccord d'échantillon (38) sont échangeables selon les besoins.

15. Système modulaire d'analyse par injection en flux selon l'une des revendications précédentes, dans lequel plusieurs modules de mélange (24) sont agencés en série et disposent de raccords de réactif séparés.

16. Système modulaire d'analyse par injection en flux selon l'une des revendications précédentes, comprenant un module de liaison supplémentaire qui est agencé en aval en série avec un module de mélange et qui établit une liaison d'agents avec un bloc de modules séparé.

17. Système modulaire d'analyse par injection en flux selon la revendication 16, dans lequel le bloc de modules séparé présente un module de mélange supplémentaire et un module d'analyse.
